# EUROPEAN PATENT APPLICATION

(11) **EP 4 546 163 A1**
(43) Date of publication of application: **30.04.2025**
(21) Application number: 23206021.0
(22) Date of filing: 26.10.2023
(51) Int. Cl.: G06F 16/9032

(54) **COMPUTER-IMPLEMENTED METHOD FOR PROVIDING AN AUTOMATED CHAT OUTPUT IN AN INDUSTRIAL PLANT**

(71) Applicant: ABB SCHWEIZ AG, 5400 Baden (CH)
(72) Inventor: SCHOCH, Nicolai, 69120 Heidelberg (DE); SCHMIDT, Benedikt, 69117 Heidelberg (DE); HOERNICKE, Mario, 76829 Landau (DE)
(74) Representative: Maiwald GmbH

(57) **Abstract**

A computer-implemented method for providing an automated chat output with respect to an industrial plant environment, comprising the steps:
obtaining (S1) a prompt input (P) from a user (U);
selecting (S2) at least one related industrial plant document (Dr) from a provided document database (50) of a plurality of industrial plant documents (D1, D2, D3), wherein the at least one related industrial plant document (Dr) is related to the obtained prompt input (P);
determining (S3) an enhanced prompt (Pe) using the obtained prompt input (P) and the selected at least one related industrial plant document (Dr);
determining (S4) a chat output (O) by inputting the enhanced prompt (Pe) into a first large language model (40).

## Description

### Field of the invention

The present disclosure relates to a computer-implemented method and a device for providing an automated chat output in an industrial plant.

### Background

Today, process and automation engineering requires and comprises a lot of expert knowledge, not only of the processes (e.g., chemical processes, such as reactions with specific conditions or hazards), or of the automation technology (which component or tube is needed for which purpose and under which circumstances), but also of, e.g., the libraries (MinLib, PC-Device-Lib, etc.) or tools (800xA, etc.) used for describing, engineering, and controlling applications.

For specific questions, it is quickly required to contact and ask a specific human domain expert, which is a limited resource, to help with specific tools or libraries, etc. Out-of-the-box natural language processing, NLP,-based applications are intriguing with ChatBots that provide easy usability and accessibility of the underlying AI mechanisms (e.g., Large Language Models, LLM, for question-answering, or semantic search).

However, LLMs can be confidently wrong, so it's essential to build mechanisms into the processes to ensure the accuracy of the results (e.g., by providing domain-specific information sources to be taken as context for Al-based generation of outputs, or by quoting where the answered/retrieved information source can be found, which document, which line of text, etc.).

Thus, there is a need for an improved ChatBot for the engineering and/or operation of an industrial plant.

### Summary

The present invention is defined by the subject-matter of the independent claims. Additional features of the invention are presented in the dependent claims.

According to an aspect of the invention, a computer-implemented method for providing an automated chat output in an industrial plant, comprises the following steps. A step comprises obtaining a prompt input from a user. Another step comprises selecting at least one related industrial plant document from a provided document database of a plurality of industrial plant documents, wherein the at least one related industrial plant document is related to the obtained prompt input. Another step comprises determining an enhanced prompt using the obtained prompt input and the selected at least one related industrial plant document. Another step comprises determining a chat output by inputting the enhanced prompt into a first large language model.

The method is preferably performed by a ChatBot.

The term "ChatBot", as used herein, comprises a question answering system, which preferably comprises at least one large language model.

The term "industrial plant", as used herein, comprises any industrial environment, independent on being indoors or outdoors, virtual or real, as long as it is applied in an industrial context.

The term "user", as used herein, preferably comprises industrial personal like engineers. Furthermore, the user also comprises any non-technical users like customers. In this regard, the user comprises internal users of the industrial plant as well as external users that are not associated with the industrial plant.

The term "chat output", as used herein, comprises any form of output that the first LLM is able to provide. For example, the chat output comprises an answer to a question of the user or a solution of a task provided by the user.

The term "prompt", as used herein, comprises a question of a user that should be answered by the ChatBot or a task of the user that should be executed by the ChatBot.

The term "enhanced prompt", as used herein, relates to an original prompt provided by a user that has been enriched and/or reformed based on industrial specific knowledge. Thus, the enhanced prompt for example consists of the original prompt, being the prompt input of the user, plus information retrieved from the relevant industrial plant documents. The enhanced prompt is also referred to as "expert prompt". The enhanced prompt thus is a more domain-specific and/or contextually relevant input for the first LLM compared to the obtained prompt input of the user.

The term "related industrial plant document", as used herein, relates to at least a part of an industrial plant document that is considered related to a prompt input of a user. In other words, there is no one-on-one matching of the prompt input to one single industrial plant document but rather an arbitrary section of a single industrial plant document can be considered related industrial plant document.

Preferably, the selection, or in other words the search, is implemented by using a, in particular natural language processing, NLP,-based semantic or neural search. This selection is further preferably based on a machine learning model, for example based on a pre-trained open-source or commercial LLM, e.g., Sentence-BERT, LLaMa, or DOLLY.

Furthermore, the selection is preferably based on an index of the plurality of, in particular dynamically extensible, industrial plant documents to effectively query it in natural language, e.g. using tools like LangChain or llama-index. In case of no dynamic changes to the plurality of industrial plant documents, the index may preferably be computed once-only, and remain as is, until changes to the plurality of document are made.

In other words, the determination of the chat output and the selecting of the at least one related industrial plant document are performed by only one large language model or by two or more different large language models.

Preferably, the enhanced prompt comprises additional prompt information based on the prompt input and the related industrial plant documents. The additional prompt information further preferably comprises, among others, a role of the user, a context of the prompt input, a question derived from the prompt input and an output indicator.

A sample enhanced prompt looks like the following:
Role: Act as an 800xA/MinLib Expert.
Context: based on the above related industrial plant documents.
Question: How can I implement this process.
Output indicator: Present the answer as bullet points and include the cited information source.

Preferably, the obtained prompt input is analysed, in particular semantically analysed, by a machine learning model so that the at least one related industrial plant document can be selected for determine the enhanced prompt. In other words, the selecting the at least one related industrial plant document comprises a semantic, in particular LLM-based, search for related, or in other words relevant, industrial plant documents.

Preferably, the chat output based on the enhanced prompt comprises answers, in particular with explanations, to the user prompt, code, in particular control code or pseudo-code, and/or source-citation.

Due to the determination of the enhanced prompt using the selected at least one related industrial plant document, the method supports the user of industrial plant specific products and solutions, and the method simplifies access to and utilization of industrial plant specific products and solutions, in particular by means of a custom-tailored "expert assistant chatbot".

The enhanced prompt allows the first LLM to also provide alternatives or increments to a proposed solution, where the first LLM would only propose one solution without the enhanced prompt.

Determining the enhanced prompt preferably comprises role prompting, in-context learning, chain-of-thought, providing of examples, one shot/few-shot prompting.

In other words, the method allows to provide an intelligent ChatBot, for example a ChatGPT-like support system, for an industrial application, for example relating to 800xA and/or for the MinLib, and/or PC-Device-Lib. This allows to create an advanced chat interface to the industrial plant documents (e.g. documentation, code, documents, data, information, knowledge, tools or apps).

Preferably, obtaining the prompt input from the user may comprise uploading a document, in particular to the ChatBot, as a prompt input from a user.

For example, the input prompt comprises a request for troubleshooting steps for a specific piece of machinery in the plant industry and technical details. The output may be a detailed response and step-by-step instruction and technical details for diagnosing and resolving the issue regarding the prompt input.

Furthermore, the method allows to provide a system that can act as a custom expert-chatbot trained on a tailored knowledge base, which can provide value for the user.

The enhanced prompt allows to ensure the accuracy, correctness, and suitability of the question-answering results (e.g., by providing domain-specific information sources to be taken as context for Al-based generation of outputs, or by quoting where the answered/retrieved information source can be found, which document, which line of text, etc.). Furthermore, it can be quoted where the answered information source can be found, in which text and in which line of text.

Therefore, this invention describes an LLM-based application that serves as a question-and-answer tool for the customers own methods, code, libraries, and tools.

Thus an improved ChatBot for the engineering and/or operation of an industrial plant is provided.

In preferred embodiment, the document database comprises a joint embedding space of a plurality of embeddings, wherein each embedding relates to at least a part of one of the plurality of industrial plant documents.

The process of determining the document embeddings hereby builds on "chunking methods". In the context of building LLM-related applications, "chunking" is the process of breaking down large pieces of text (e.g., the above mentioned industrial plant related documents) into smaller segments. It's an essential technique that helps optimize the relevance of the content we get back from an embedding (or vector) database once we use the LLM to embed content. Typical chunking strategies include fixed-size chunking, content-aware-chunking, etc. (which come implemented in open-source libraries such as langchain, nltk or spacy).

The term "embedding", as used herein, in other words is a representation, in particular a latent representation, of a piece of data (e.g., an input). Further preferably, the embedding is a vectorial representation, referred to as embedding vector, of an input. For example, the embedding is a meaningful vectorial representation of words, sentences and/or formulations about engineering or operation context, like for example intentions of the user or content of an industrial plant document. The embeddings are preferably obtained or learned by a natural language processing technique, i.e., an LLM.

Preferably, the joint embedding space is dynamically extendable. In other words, the joint embedding space is not a fixed pool of embeddings but can be extended and/or adapted, for example when new industrial plant documents are available or further development to the embedding space itself are made.

The embeddings are preferably generated in a previous step before entering the prompt input.

Thus, the document database uses a suitable vector database for indexing and searching the at least one related industrial plant document.

In preferred embodiment, wherein selecting the at least one related industrial document from the provided document database comprises the following steps. A step comprises determining a prompt embedding of the obtained prompt input. Another step comprises mapping the prompt embedding into the embedding space. Another step comprises selecting embeddings in the embedding space, which are similar to (i.e., mathematically close to) the embedding with respect to a predetermined metric.

The predetermined metric preferably comprises a similarity metric like Levenstein, Wasserstein or Cosine-Similarity.

In a preferred embodiment, mapping the prompt embedding into the embedding space comprises using a predetermined ontology, taxonomy and/or vocabulary.

Using an underlying ontology or taxonomy or vocabulary helps generating a more deterministic and transparent embedding.

In a preferred embodiment, mapping the prompt embedding into the embedding space comprises using a named-entity-recognition transformer to identify process typical names or library specific names in the prompt input and/or the at least one industrial plant document.

The process typical names or library specific names for example comprise names like 800xA or MinLib or specific terms, names, method signatures, parameters, plant or control components, abbreviations and/or vocabulary of these.

In a preferred embodiment, the predetermined metric comprises a semantically meaningful metric.

In a preferred embodiment, determining the prompt embedding comprises the following steps. A step comprises identifying engineering or operations content in the input prompt. Another step comprises determining the prompt embedding based on the identified engineering or operations content.

In a preferred embodiment, the at least one industrial plant document comprises an engineering document and/or an operations document. The engineering document comprises sources, libraries, code and/or repositories related to engineering and/or automation workflows of the industrial plant. The operations document comprises sources, libraries, code and/or repositories related to an operation of the industrial plant.

Preferably, the at least one industrial document comprises an 800xA-document or a MinLib-document or a PC-Device-Lib-document, or a ReUse-Lib-document, or others.

Preferably, the libraries comprise programming language-related libraries and/or code-related libraries.

In other words, the chat output is industrial plant specific tailored, e.g., provides custom-tailored transparent and/or explainable documentation-based expert support for user for using specific industrial tools, libraries, solutions, code and/or documentation.

In a preferred embodiment, the method comprises providing the document database, wherein in particular providing the document database comprises mapping the plurality of industrial plant documents into the embedding space.

Thus, the plurality of industrial plant documents are transformed into embeddings, in particular embedding vectors. The embedding vector comprises a plurality of vector entries specifying the embedding. Each of the vector entries relate to the content of the industrial plant document. The mapping then comprises an analysis of the embeddings with respect to its location in the overall embedding space, e.g., in particular with respect to what other embedding vectors are closest. In other words, industrial plant documents that are similar are also located near each other in the embedding space.

This mechanism allows to build up an index of the entire document database, which also allows for continuous extension and/or replacement and/or update of the document data base.

Furthermore, this allows full control of the information sources (documentation, code, libraries, methods, tools) used for training and/or fine-tuning the ChatBot.

Preferably, the providing of the document database is a preparation step for the described method. However, the providing of the document database further preferably continues when the method is already performed, i.e. the ChatBot is already deployed.

In other words, an industrial plant document is taken, in particular together with engineering ontology and library descriptors, and mapped into one joint embedding space.

This step is preferably performed by an LLM.

In a preferred embodiment, the method comprises post-processing the chat output, wherein post-processing comprises summarizing the chat output, shorten the chat output, give citation/sources for the chat output, and/or determining a library-specific or library-consistent chat output.

Post-processing preferably comprises describing a stepwise approach of the chat output, using a specific set of vocabulary, terms, components and/or code blocks. This can be for example achieved by using a named-entity-recognition transformer to find typical names.

Post-processing preferably comprises ordering and/or selecting different solutions comprised in the chat output.

In a preferred embodiment, the first large language model is industrial plant specific fine-tuned.

The industrial plant specific fine-tuning preferably comprises fine-tuning of a pre-trained instruction-tuned LLM, and/or training strategies like multi-task strategies, e.g. adaptive layers and gradual unfreezing.

In a preferred embodiment, the industrial plant specific fine-tuning comprises at least one of fine-tuning of input/output schema, fine-tuning for tasks, fine-tuning on a vocabulary/ontology and fine-tuning on library documents.

This allows for example to generate library-specific (pseudo-) control code, based on underlying context database of engineering library documents (e.g., with method signatures, method descriptions, I/O, parameters, tags, etc. from MinLib, PC-Device-Lib, ReUse Lib, AC800M Lib, etc.)

Preferably, the fine tuning follows (optionally pre-trained) instruction-tuning, focussed on having the LLM follow instructions and aligning with humans. Thus, the LLM should be suitable for several generic tasks, such as "answer this question", "summarize a given text", "produce python code to do some task".

Fine-tuning of the LLM, in particular input-output schema and structure of the LLM, lowers the dimensionality of the LLM to focus the LLM on one task.

Preferably, for a specific engineering application, a specific instruction-tuned LLM that is fine-tuned for the specific task is used. For example "answer this question with Code for MinLib or 800xA".

Besides the enhanced prompt capabilities, the ChatBot can be further extended by engineering library documents (e.g., method signatures, method description, Input/Output, parameters, tags from MinLib, PC-Device-Lib, ReUse Lib, AC800M Lib and more) using another LLM that for example uses a different embedding space for itself.

In other words, for different specific purposes, the first LLM preferably comprises differently fine-tuned pre-trained instruction-tuned models, in particular differently fine-tuned out-of-the-box LLMs.

According to an aspect of the invention, the device comprises means for carrying out the method, as described herein.

Preferably, the device comprises a ChatBot.

According to an aspect of the invention, a computer program comprises instructions, which, when the program is executed by a computer, cause the computer to carry out the method, as described herein.

According to an aspect, a computer-readable storage medium comprising instructions which, when executed by a computer, cause the computer to carry out the method, as described herein.

### Brief description of the drawings

Exemplary embodiments of the invention will be described in the following with reference to the accompanying drawings:
Fig. 1 schematically shows a device for providing an automated chat output in an industrial plant; and
Fig. 2 schematically shows a method for providing an automated chat output in an industrial plant.

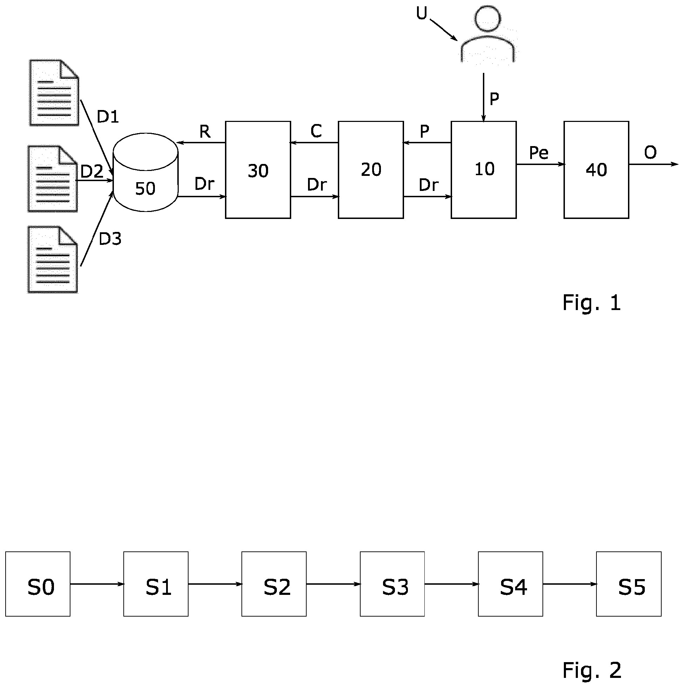

Fig. 1 illustrates a device for providing an automated chat output in an industrial plant. The device comprises a processing unit 10, an analysis unit 20, a selection unit 30 and an output unit 40. A database 50 is also provided, which may be part of the device.

The database 50 comprises a plurality of industrial plant documents D1, D2, D3. For example, the database 50 comprises a joint embedding space of a plurality of embeddings. Each embedding is a representation of one of the industrial plant documents D1, D2, D3. For example, the embedding is a vectorial representation, referred to as embedding vector, of the industrial plant document D1, D2, D3. For example, the embedding is a meaningful vectorial representation of words, sentences and/or formulations about engineering or operation context, like for example intentions of the user or content of an industrial plant document D1, D2, D3. Providing the document database 50 thus preferably comprises mapping the plurality of industrial plant documents D1, D2, D3 into the embedding space.

A user U provides a prompt input P to the device, in particular the processing unit 10, for example via a user interface. The prompt input P comprises a question or a task that the user wants to have support from by the device. The prompt input P is usually directly used as an input for an output unit (like the output unit 40), in particular in form of a large language model, LLM, to provide a chat output O. However, in this case, the processing unit 10 provides the prompt input P to the analysis unit 20.

The analysis unit 20 processes the prompt input P, for example in a semantically meaningful manner. In other words, the analysis unit 20 determines a context C of the prompt input P. The context C for example comprises engineering context or operation context. The analysis unit 20 provides the context C to the selection unit 30. In case of using embeddings, the analysing unit 20 determines an embedding, in particular an embedding vector, from the prompt input P. The vector entries reflect the context C of the prompt input P. In this case, the analysis unit 20 provides the embedding vector of the prompt unit P to the selection unit 30.

The selection unit 30 selects at least one related industrial plant document Dr from the document database 50. The at least one related industrial plant document Dr is related to the obtained prompt input P. In other words, the selection unit 30 uses the context data C and based on the context data C sends a request R to the data base 50 for any industrial plant document that relates to the context data C. The database 50 then provides the at least one related industrial plant document Dr to the selection unit 30. When using embeddings, the selection unit 30 uses the embedding vector of the prompt P and based on the embedding vector of the prompt P sends a request R to the data base 50 for any industrial plant document that relates to the embedding vector of the prompt P. In other words, the embedding vector of the prompt P is mapped into the joined embedding space and all embedding vectors of industrial plant document that are mapped, or in other words located, near the embedding vector of the prompt P are selected as related industrial plant documents Dr. The database 50 then provides the at least one related industrial plant document Dr to the selection unit 30. The context C does not necessarily relate directly to one industrial plant document, but possible to only a part of the industrial plant document. Consequently, the at least one related industrial plant document Dr may comprise only part of an industrial plant document.

The selected at least one related industrial plant document Dr is provided to the processing unit 10, where based on the at least one related industrial plant document D and the prompt input P an enhanced prompt Pe is determined.

The enhanced prompt Pe is then provided to the output unit 40 to determine the chat output O. The output unit 40 comprises a large language model, LLM. The processing unit 10, the analysis unit 20 and the selection unit 30 may also comprise machine learning models, in particular LLMs, or use the same machine learning model.

Thus, the output unit 40, being for example a generic LLM, does not provide the chat output O based on the prompt input P of the user only, but uses an enhanced prompt Pe that is enriched and/or reformulated based on industrial plant specific knowledge and thus leads to a chat output O with improved accuracy.

In a first example the user prompt input P comprises:
"How does XYZ work using 800xA / MinLib?"

Based on the enhanced prompt the ChatBot yields a documentation-based custom-tailored answer, including reference(s) to where the information was found exactly.

In a second example, the user prompt input P comprises:
"Create a conveyor belt interlocked by 4 Drift Switches and 2 Rope Switches".

Based on the enhanced prompt, the ChatBot, which is in this case trained on MinLib, and answers with a respective code, wherein it is indicated that this information is based on Document ABC1234 and Library XZY9876.

In a third example, the user prompt input P comprises:
"Help me find the right classes, methods/functions, properties, modes, services, modules, or interfaces for XYZ".

Based on the enhanced prompt, the ChatBot, which is in case it is trained for Function Modules and 800xA, answers, e.g., "I found the following function modules from the repository that could be used: 'SeperatorFM', 'FeederFM' and 'ReactorFM' Those would fit with XYZ."

This answer could link to an Asset Administration Shell (AAS) or other data exchange format, that contains the information about the function modules. The engineer would then be able to simply click on the link and integrate the FM into his project.

In a third example, the user prompt input P comprises:
"Please tell me how other ABB engineers have solved a valve to pump interlock, using PC Device Library?"

Based on the enhanced prompt, one answer could be a Boolean equation connecting the feedback signals of the valve with the interlock inputs of the pump within the specific library elements. The Chatbot could also reply with an xml document for Control Builder M import, containing all relevant information about the library elements used and the connection between these.

Fig. 2 illustrates a method for providing an automated chat output in an industrial plant.

A preparation step S0 comprises providing a document database of a plurality of industrial plant documents.

A first step S1 comprises obtaining a prompt input P from a user U. In other words, the prompt input P of the user U, also referred to as original prompt, relates to a question or a task formulated in human language.

A second step S2 comprises selecting at least one related industrial plant document Dr from a provided document database 50 of a plurality of industrial plant documents D1, D2, D3, wherein the at least one related industrial plant document Dr is related to the obtained prompt input P.

A third step S3 comprises determining an enhanced prompt Pe using the obtained prompt input P and the selected at least one related industrial plant document Dr.

A fourth step S4 comprises determining a chat output O by inputting the enhanced prompt Pe into a first large language model 40.

A fifth step S5 comprises post-processing the chat output O, wherein post-processing comprises summarizing the chat output O, shorten the chat output O, give citation/sources for the chat output O, and/or determining a library-specific or library-consistent chat output O.

## Claims

1. A computer-implemented method for providing an automated chat output in an industrial plant, comprising the steps:
obtaining (S1) a prompt input (P) from a user (U);
selecting (S2) at least one related industrial plant document (Dr) from a provided document database (50) of a plurality of industrial plant documents (D1, D2, D3), wherein the at least one related industrial plant document (Dr) is related to the obtained prompt input (P);
determining (S3) an enhanced prompt (Pe) using the obtained prompt input (P) and the selected at least one related industrial plant document (Dr);
determining (S4) a chat output (O) by inputting the enhanced prompt (Pe) into a first large language model (40).

2. The method of claim 1,
wherein the document database (50) comprises a joint embedding space of a plurality of embeddings, wherein each embedding relates to at least a part of one of the plurality of industrial plant documents (D1, D2, D3).

3. The method of claim 2,
wherein selecting (S2) the at least one related industrial document (Dr) from the provided document database (50) comprises:
determining a prompt embedding of the obtained prompt input (P);
mapping the prompt embedding into the embedding space;
selecting embeddings in the embedding space, which are similar to the embedding with respect to a predetermined metric.

4. The method of claim 3,
wherein mapping the prompt embedding into the embedding space comprises using a predetermined ontology, taxonomy and/or vocabulary.

5. The method of any one of claims 3 or 4,
wherein mapping the prompt embedding into the embedding space comprises using a named-entity-recognition transformer to identify process typical names or library specific names in the prompt input and/or the at least one industrial plant document.

6. The method of any one of claims 3 to 5,
wherein the predetermined metric comprises a semantically meaningful metric.

7. The method of any one of claims 3 to 6,
wherein determining the prompt embedding comprises:
identifying engineering or operations content (C) in the input prompt (P);
determining the prompt embedding based on the identified engineering or operations content.

8. Method of any one of the preceding claims
wherein the at least one industrial plant document (D1, D2, D3) comprises an engineering document and/or an operations document;
wherein the engineering document comprises sources, libraries, code and/or repositories related to engineering and/or automation workflows of the industrial plant; and
wherein the operations document comprises sources, libraries, code and/or repositories related to an operation of the industrial plant.

9. Method of any one of the preceding claims, comprising:
providing (S0) the document database (50), wherein in particular providing the document database comprises mapping the plurality of industrial plant documents (D1, D2, D3) into the embedding space.

10. Method of any one of the preceding claims, comprising:
post-processing the chat output (O), wherein post-processing comprises summarizing the chat output (O), shorten the chat output (O), give citation/sources for the chat output (O), and/or determining a library-specific or library-consistent chat output (O).

11. Method of any one of the preceding claims, wherein the first large language model (40) is industrial plant specific fine-tuned.

12. Method of claim 11,
wherein the industrial plant specific tuning comprises at least one of fine tuning of input/output schema, fine-tuning for tasks, fine-tuning on a vocabulary/ontology or fine-tuning on library documents.

13. A device, comprising means for carrying out the method of any one of claims 1-12.

14. A computer program, comprising instructions which, when the program is executed by a computer, cause the computer to carry out the method of any one of claims 1-12.

15. A computer-readable storage medium comprising instructions which, when executed by a computer, cause the computer to carry out the method of any one of claims 1-12.
